(19) Europäisches Patentamt
European Patent Office
Office européen des brevets

(11) EP 2 139 140 A2

(12) **EUROPEAN PATENT APPLICATION**

(43) Date of publication:
30.12.2009 Bulletin 2009/53

(51) Int Cl.:
*H04L 1/00* (2006.01)

(21) Application number: 09153816.5

(22) Date of filing: 26.02.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 23.06.2008 JP 2008162695

(71) Applicant: Fujitsu Limited
Kawasaki-shi, Kanagawa 211-8588 (JP)

(72) Inventors:
• Kikuchi, Yoichi
Kawasaki-shi, Kanagawa 211-8588 (JP)
• Mikami, Junya
Kawasaki-shi, Kanagawa 211-8588 (JP)

(74) Representative: Stebbing, Timothy Charles
Haseltine Lake LLP
Lincoln House, 5th Floor
300 High Holborn
London WC1V 7JH (GB)

(54) **Mobile radio apparatus employing data rate matching**

(57) An mobile radio apparatus includes a data division section configured to divide an input data into a plurality of block data of different sizes, an encoding section configured to encode each block data, a rate matching processing section configured to adjust a division size of each encoded block data to a rate matching size so as to fit to a communication channel size, and a rate matching calculation section configured to obtain a rate matching size for each block data according to a ratio of the division sizes of the block data.

FIG. 4

EP 2 139 140 A2

**Description**

FIELD

The present invention relates to a mobile radio apparatus.

BACKGROUND

Today, the W-CDMA system is widely used as a third-generation (3G) radio communication system. Further, a standard called HSDPA (High-Speed Downlink Packet Access) is coming into practical use to enable data communication with a speed (14 Mbps maximum) higher than W-CDMA. HSDPA is also called 3.5G because HSDPA is an improved version of the 3G system. The standardization is carried out by 3GPP (the 3rd Generation Partnership Project), an association for standardizing the 3G system.

After the aforementioned 3.5G mobile communication system is realized by HSDPA, it is expected to proceed to a fourth generation (4G) in an early stage so as to realize much higher speed and larger capacity. However, in the present situation, before proceeding to the fourth generation, another stage called 3.9G (which may also be called Long Term Evolution (LTE)) is planned, and then the 4G will come out thereafter. The communication speed of 3.9G is estimated to be of the order of 100 Mbps at the maximum.

At present, according to the 3.9G specification, a data length (block size) has a limit depending on the interleaver types of a turbo encoder, and it is preferable to divide data into a predetermined block size. For example, in the case of turbo encoders using QPP (Quadratic Permutation Polynomial) Interleavers described in 3GPP TS 36.212, it is preferred to adjust the data to any fixed size out of 188 types.

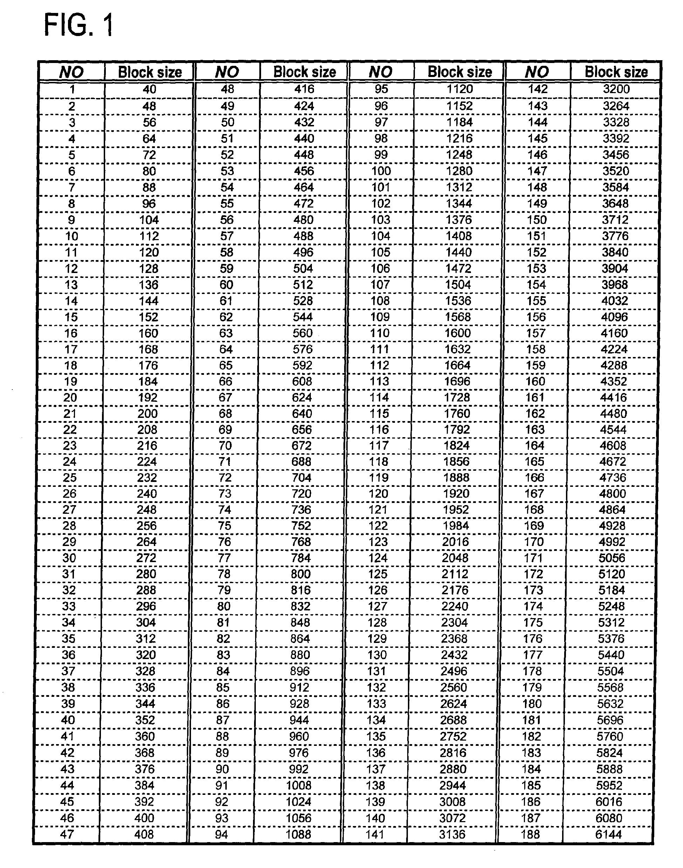

FIG. 1 illustrates a list (188 types) of input data lengths (block sizes) when using the QPP Interleaves according to 3GPP TS 36.212. If a data size is larger than any of the 188 types of fixed sizes illustrated in FIG. 1, the data is to be divided to fit to the fixed size. Each divided data is called an encoded block. The above division is not always performed uniformly, and division into different sizes may occur. Also, when dividing, if it is not possible to divide into any fixed sizes of 188 types, filler bit (s) are inserted to make up the shortage. Thus, division into any fixed sizes is obtained. Additionally, as to the details of the dividing method in regard to the QPP Interleaves, refer to 3GPP TS 36.212.

Encoding processing is performed on the basis of the above divided block data. After a block data is encoded by an error correction encoder (turbo encoder, for example), rate matching processing is carried out on the encoded block. The rate matching processing is a process for adjusting the encoded block division size to fit to a communication channel size. In the rate matching processing, by means of either puncturing to remove a portion of the encoded bit data or by repeating the insertion thereof, the size of the encoded block is fit to the communication channel size.

In the encoding processing at the transmission side, an input data is divided into a plurality of encoding blocks so as to use the QPP Interleaves. Then each encoding block is encoded by the encoder (filler bits are inserted in case of necessity). After the encoding, the rate matching processing is carried out after depadding processing to remove the filler bits. Then, the rate-matched encoded blocks are combined and output as an overall data.

Here, in the patent document 1 illustrated below, there is disclosed a configuration such that a transmission data is divided into a plurality of block data, and each of the plurality of blocks is error-correction encoded on a block-by-block basis by means of a plurality of error correction encoders, and then the plurality of blocks being error-correction encoded on the block-by-block basis are combined by means of a data combination section.

On the receiving side, decoding processing is performed. Decoded data is checked using CRC (Cyclic Redundancy Code) added to the data. From the check result of the above CRC, whether the decoding is successful or failed is decided. A ratio of CRC errors in the decoded result is referred to as "block error rate".

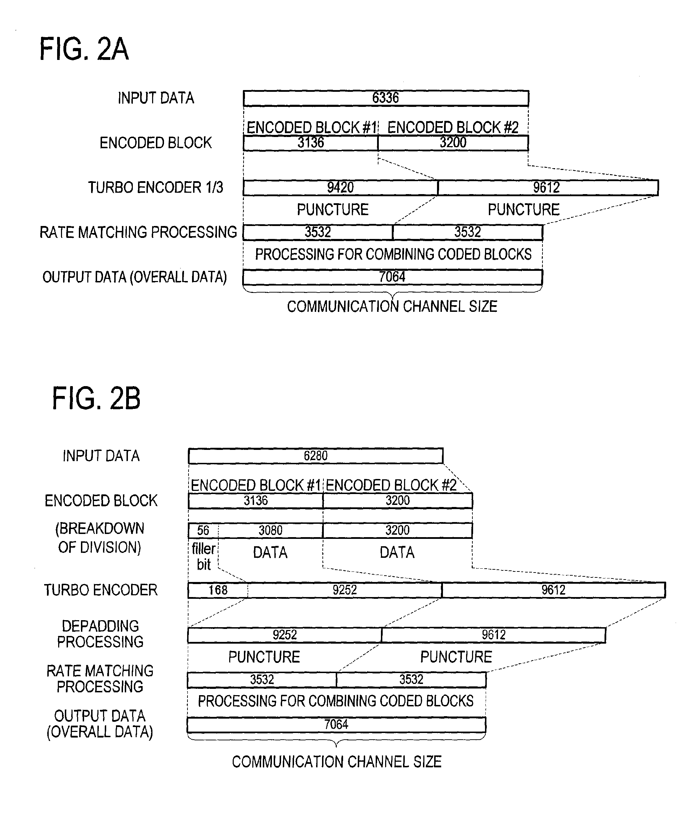

FIGS. 2A and 2B illustrate diagrams illustrating examples of the conventional rate matching processing. FIG. 2A is an example when no filler bit is inserted, while FIG. 2B is an example when filler bits are inserted. In FIG. 2A, an input data (6336 bits) is divided into an encoded block #1 (3136 bits) and an encoded block #2 (3200 bits), according to the block size illustrated in FIG. 1. After the above encoded blocks are passed through a turbo encoder (with a coding rate of 1/3), the block sizes of the encoded blocks #1 and #2 become 9420 bits and 9612 bits, respectively.

In case that a communication channel size is 7064 bits, the communication channel size is uniformly divided by an encoded block number 2. Thus, the rate matching size for each encoded block becomes 3532 bits. Accordingly, in regard to the encoded block #1, the rate matching processing of 9420 bits → 3532 bits is performed, while in regard to the encoded block #2, the rate matching processing of 9612 bits → 3532 bits is performed. In the example illustrated in FIG. 2A, puncture processing is performed. Thereafter, the encoded blocks #1, #2 are combined, and output as an overall data fit to the communication channel size of 7064 bits.

Here, the coding rate of the encoded block #1 is 3136/3532=0.88788, while the coding rate of the encoded block #2 is 3200/3532=0.90600. As such, a coding rate for each encoded block is different.

In FIG. 2B, the number of bits in an input data is 6280 bits. Therefore, in case the block size of the encoded block #2 is made to be 3200 bits, to make the block size of the encoded block #1 to be 3136 bits as specified, 56 bits of the filler bits are inserted.

By encoding the above encoded blocks using the turbo encoder (with a coding rate of 1/3), similar to FIG. 2A, the block sizes of the encoded blocks #1 and #2 become 9420 bits and 9612 bits, respectively. Among the above 9420 bits in the encoded block #1, the filler bits are 168 bits. When the filler bits are inserted, processing to remove the filler bits (depadding processing) is performed after the encoding. As a result, the encoded block #1 becomes 9252 bits. Subsequently, each encoded block #1, #2 is rate-matched to 3532 bits, combined with each other, and output. At this time, the coding rate of the encoded block #1 becomes 3080/3532=0.87203. As such, when filler bits are inserted, the difference of coding rates between divided encoded blocks becomes greater.

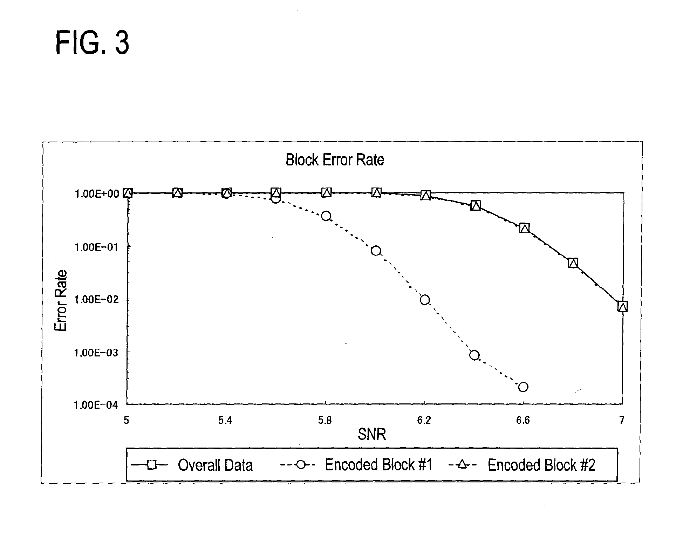

FIG. 3 illustrates graphs illustrating block error rates of the encoded blocks, in which the block error rates of the encoded blocks #1, #2 in FIG. 2B are illustrated. In FIG. 3,

the block error rates of the encoded block #1 indicated by the dotted line with ○,

the block error rates of the encoded block #2 indicated by the dotted line with △, and

the block error rates of the overall data indicated by the dotted line with □

are illustrated respectively. The vertical axis is a block error rate (BLER), and the horizontal axis is SNR (signal to noise ratio).

As illustrated in FIG. 3, the block error rate of the encoded block #2, having a higher coding rate, is worse than the block error rate of the encoded block #1. Also, the block error rate of the overall data obtained by combining the encoded blocks #1, #2 is substantially the same order of the block error rate of the encoded block #2. In other words, the block error rate of the overall data is substantially coincident with the block error rate of the encoded block having the worst block error rate.

[Patent document 1] the official gazette of the Japanese Unexamined Patent Publication No. 2004-349742.

In the rate matching processing to the encoded block, the size of each encoded block is adjusted to have such a value that the communication channel size is uniformly divided by the number of the encoded blocks. As a result, when a different size is produced by dividing the encoded blocks, the coding rate of each encoded block becomes different. Then, in the decoding processing on the receiving side, the block error rates for each encoded block come to have a difference.

Since one data (overall data) is obtained after the divided encoded blocks are combined, the block error rate of the overall data becomes substantially equal to the block error rate of the encoded block having the worst block error rate. As such, when a difference occurs in the sizes of the encoded blocks, a difference occurs in the block error rates, which raises a problem of causing a deteriorated block error rate of the overall data.

SUMMARY

Accordingly, it is an object in one aspect of the invention to provide a mobile radio apparatus performing rate matching processing to improve a block error rate.

According to an aspect of the invention, an mobile radio apparatus includes a data division section configured to divide an input data into a plurality of block data of different sizes, an encoding section configured to encode each block data, a rate matching processing section configured to adjust a division size of each encoded block data to a rate matching size so as to fit to a communication channel size, and a rate matching calculation section configured to obtain a rate matching size for each block data according to a ratio of the division sizes of the block data.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF DRAWINGS

FIG. 1 is a list (188 types) of input data lengths (block sizes) when using the QPP Interleaves according to 3GPP TS 36.212;

FIGs. 2A and 2B are examples of the conventional rate matching process;

FIG. 3 is graphs illustrating block error rates of the encoded blocks;

FIG. 4 is an exemplary configuration of an encoding processing section of mobile radio apparatus according to the embodiment of the present invention;

FIG. 5 is a diagram illustrating an example of the calculation of the rate matching size according to the present embodiment;

FIG. 6 is graphs illustrating block error rates of encoded blocks resulting from the rate matching processing of the present embodiment.

DESCRIPTION OF EMBODIMENTS

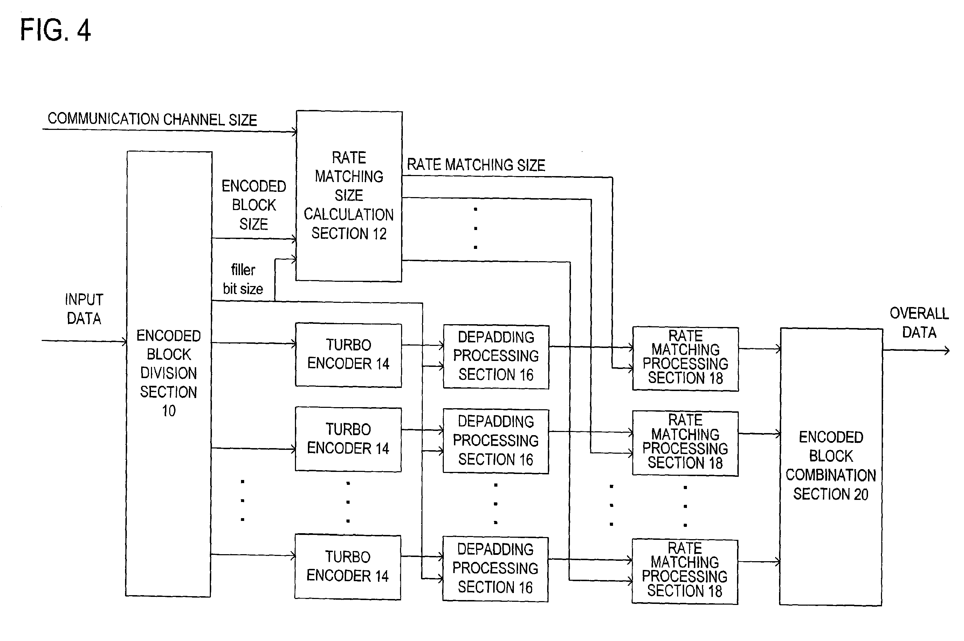

FIG. 4 illustrates an exemplary configuration of an encoding processing section (encoding apparatus) of a mobile radio apparatus according to the embodiment. The mobile radio apparatus includes a mobile radio terminal and a mobile radio base station in a mobile radio system such as a mobile phone network. An encoding block division section 10 divides an input data into a plurality of encoded blocks. The division size of each encoded block is any one of a plurality of fixed sizes of discontinuous values being specified in advance (refer to FIG. 1). When the number of bits in the input data is indivisible into blocks of the fixed sizes, filler bits are added so that the each divided block has a fixed size.
As will be described later, in order to obtain substantially uniform coding rate of each encoded block, a rate matching size calculation section 12 calculates the size of each encoded block in the rate matching processing (which is referred to as rate matching size), based on the division size of each encoded block.
Turbo encoders 14, depadding processing sections 16, and rate matching processing sections 18 are respectively provided in number equal to the number of encoded blocks. Each turbo encoder 14 turbo-encodes each encoded block. Here, error correction encoding is not limited to the use of a turbo encoding system. It may also be possible to adopt other systems.
Each depadding processing section 16 removes filler bits from each turbo-encoded block when the filler bits are added to the encoded block.
Each rate matching processing section 18 executes rate matching processing to adjust each encoded block size, being output from depadding processing section 16, to the rate matching size of the each encoded block obtained by rate matching calculation section 12.
An encoded block combination section 20 combines each encoded block adjusted to the rate matching size, and outputs the overall data having a size fit to the communication channel size.
A calculation method of the rate matching size applied in rate matching size calculation section 12 will be described hereafter.

(1) Let
number of encoded blocks = n
division size of each encoded block = Ci (i=1, ...n) filler bit size = Yi (i=1, ...n)
communication channel size = P
(2) A size is obtained by subtracting the filler bit size from the encoded block division size.
Now, let Di (i=1, ...n) to be the division size of each encoded block after removing the filler bits, then,

$$Di = Ci - Yi$$

Here, in case of the filler bits not inserted,

$$Di = Ci$$

(3) Let $x_i$ (i=1, ...n) to be the rate matching size for each encoded block. Then, the rate matching size can be obtained from the following expression 1.

$$x_i = \left\lfloor \frac{Di}{\sum_{i=1}^{n} Di} \times P \right\rfloor \qquad \text{... expression 1}$$

(4) In the above expression 1, figures below decimal point are discarded. As a result, when the obtained rate matching sizes are summed, there may be a case of having a remainder (difference value) in the communication channel size.

Let M to be the remainder (difference value), M can be obtained from the following expression 2.

$$M = P - \sum_{i=0}^{n} x_i$$ $\qquad$ ... expression 2

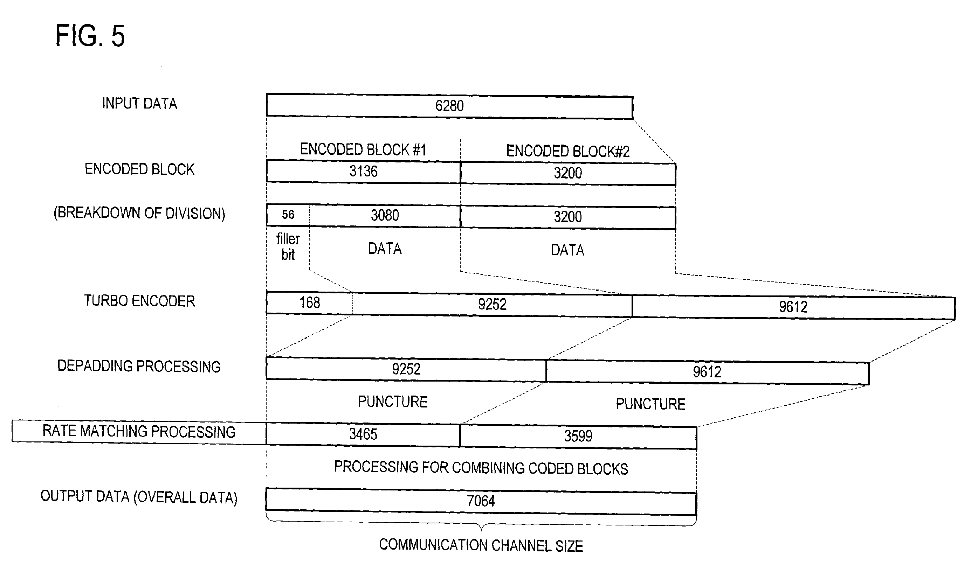

When there is a remainder, M is assigned to the rate matching size of the encoded block having the largest discarded value. In the following, there is explained a typical example in reference to FIG. 5 when the above calculation method is applied to the QPP Interleaves described in 3GPP TS 36.212.

FIG. 5 is a diagram illustrating an example of the calculation of the rate matching size according to the present embodiment. In FIG. 5, there is illustrated a case that the input data size is 6280 bits and the communication channel size P is 7064 bits, which is an example corresponding to FIG. 2B. To use the QPP Interleaves, the input data is divided into two encoded blocks #1, #2. To each numeric value corresponding to each encoded block #1, #2, a corresponding suffix is attached.

The respective division sizes of the encoded blocks #1, #2 are

$C_1$=3136, $C_2$=3200

At this time, the numbers of filler bits are

$Y_1$=56, $Y_2$=0

Using expression 1, the rate matching size for each encoded block is calculated.

Because the filler bits are inserted in the encoded block #1, the rate matching calculation is performed after subtracting the filler bit size. Therefore, the sizes for use in the calculation are

$D_1$=3136-56=3080

$D_2$=3200-0=3200

The rate matching sizes $x_1$, $x_2$ for the respective encoded blocks are

$$x_1 = \left\lfloor \frac{3080}{3080 + 3200} \times 7064 \right\rfloor$$

$$x_2 = \left\lfloor \frac{3200}{3080 + 3200} \times 7064 \right\rfloor$$

Thus, the following are obtained.

$$x_1 = \left\lfloor 3464.5096 \right\rfloor = 3464$$

$$x_2 = \left\lfloor 3599.4904 \right\rfloor = 3599$$

Because the figures below decimal point are discarded, from expression 2,

$$M = 7064 - 3464 - 3599 = 1$$

As a result, because the discarded value of the encoded block #1 is larger, the remainder M is added to the encoded block #1. Therefore, the rate matching sizes of the encoded blocks #1, #2 are

$$x_1 = 3465, \quad x_2 = 3599$$

As a result, the coding rate of the encoded block #1 is 3080/3465=0.88889, while the coding rate of the encoded block #2 is 3200/3599=0.88914. Namely, substantially uniform coding rates are obtained.

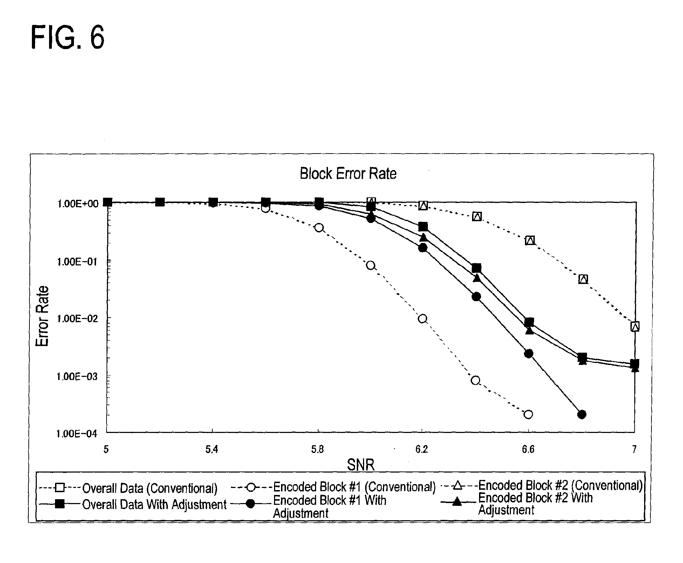

FIG. 6 illustrates graphs illustrating block error rates of encoded blocks resulting from the rate matching processing of the present embodiment. In this figure, the block error rates of the encoded blocks #1, #2 in FIG. 5 are illustrated. In FIG. 6, the solid line with •, the solid line with ▲ and the solid line with ■ respectively indicate the block error rates of the encoded block #1, the encoded block #2, of which sizes are adjusted by applying the rate matching processing according to the present embodiment, and also the overall block. The dotted line with O, the dotted line with Δ and the dotted line with □ respectively correspond to the graphs illustrated in FIG. 3, indicating the conventional block error rates of the encoded block #1, the encoded block #2 and the overall block, when the rate matching processing according to the present embodiment is not applied. The vertical axis is block error rate (BLER) and the horizontal axis is SNR (signal to noise ratio).

The rate matching sizes are determined to make the coding rates of the encoded blocks substantially uniform. Therefore, as compared to the conventional case, the block error rate of the encoded block #1 having a relatively bad block error rate is improved as compared to before. As a result, the block error rate of the overall data is also improved. Here, the block error rate of the encoded block #2 is deteriorated as compared to before. However, the block error rate of the overall data is determined by a worst block error rate among the block error rates of a plurality of encoded blocks. Therefore, by reducing the difference between the block error rates of the encoded blocks #1, #2 having substantially uniform coding rates, an improved block error rate can be attained.

In the foregoing description, explanation has been given by exemplifying a standard specification defined in 3GPP TS 36.212. However, the application of the present invention is not limited to the above 3GPP specification. The present invention is applicable to rate matching processing of a plurality of block data in a standard of dividing into a plurality of block data having different sizes.

In the mobile radio apparatus, because the rate matching size is determined for each block data depending on the division size, the coding rate of each block data becomes substantially uniform. As a result, the block error rate becomes also uniform, and the block error rate as a whole is improved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present inventions have been described in detail, it should be understood that the various changes, substitutions, and alterations could be made hereto without departing from the spirit and scope of the invention.

**Claims**

1. A mobile radio apparatus comprising:

    a data division section configured to divide an input data into a plurality of block data of different sizes;
    an encoding section configured to encode each block data;
    a rate matching processing section configured to adjust a division size of each encoded block data to a rate matching size so as to fit to a communication channel size; and
    a rate matching calculation section configured to obtain a rate matching size for each block data according to a ratio of the division sizes of the block data,.

2. The mobile radio apparatus according to claim 1,
    wherein the rate matching size calculation section obtains the rate matching size of each block data by multiplying the communication channel size by a ratio of the division size of each block data to the sum of the division sizes of the plurality of block data.

3. The mobile radio apparatus according to claim 2,
    wherein the division size of the block data having filler bits inserted therein is a size after the number of bits in the filler bits is removed.

4. The mobile radio apparatus according to claim 2,

wherein the rate matching size calculation section discards figures below decimal point of the obtained rate matching size, and when a difference is produced between the sum of the plurality of rate matching sizes and the communication channel size, adds the difference value to the rate matching size having the largest discard amount among the rate matching sizes of the plurality of block data.

5. An encoding apparatus comprising:

a data division section configured to divide an input data into a plurality of block data of different sizes;
an encoding section configured to encode each block data;
a rate matching processing section configured to adjust a division size of each encoded block data to a rate matching size so as to fit to a communication channel size; and
a rate matching calculation section configured to obtain a rate matching size for each block data according to a ratio of the division sizes of the block data,.

6. The encoding apparatus according to claim 5,
wherein the rate matching size calculation section obtains the rate matching size of each block data by multiplying the communication channel size by a ratio of the division size of each block data to the sum of the division sizes of the plurality of block data.

7. The encoding apparatus according to claim 6,
wherein the division size of the block data having filler bits inserted therein is a size after the number of bits in the filler bits is removed.

8. The encoding apparatus according to claim 6,
wherein the rate matching size calculation section discards figures below decimal point of the obtained rate matching size, and when a difference is produced between the sum of the plurality of rate matching sizes and the communication channel size, adds the difference value to the rate matching size having the largest discard amount among the rate matching sizes of the plurality of block data.

# FIG. 1

| NO | Block size | NO | Block size | NO | Block size | NO | Block size |
|----|-----------|----|-----------|----|-----------|----|-----------|
| 1 | 40 | 48 | 416 | 95 | 1120 | 142 | 3200 |
| 2 | 48 | 49 | 424 | 96 | 1152 | 143 | 3264 |
| 3 | 56 | 50 | 432 | 97 | 1184 | 144 | 3328 |
| 4 | 64 | 51 | 440 | 98 | 1216 | 145 | 3392 |
| 5 | 72 | 52 | 448 | 99 | 1248 | 146 | 3456 |
| 6 | 80 | 53 | 456 | 100 | 1280 | 147 | 3520 |
| 7 | 88 | 54 | 464 | 101 | 1312 | 148 | 3584 |
| 8 | 96 | 55 | 472 | 102 | 1344 | 149 | 3648 |
| 9 | 104 | 56 | 480 | 103 | 1376 | 150 | 3712 |
| 10 | 112 | 57 | 488 | 104 | 1408 | 151 | 3776 |
| 11 | 120 | 58 | 496 | 105 | 1440 | 152 | 3840 |
| 12 | 128 | 59 | 504 | 106 | 1472 | 153 | 3904 |
| 13 | 136 | 60 | 512 | 107 | 1504 | 154 | 3968 |
| 14 | 144 | 61 | 528 | 108 | 1536 | 155 | 4032 |
| 15 | 152 | 62 | 544 | 109 | 1568 | 156 | 4096 |
| 16 | 160 | 63 | 560 | 110 | 1600 | 157 | 4160 |
| 17 | 168 | 64 | 576 | 111 | 1632 | 158 | 4224 |
| 18 | 176 | 65 | 592 | 112 | 1664 | 159 | 4288 |
| 19 | 184 | 66 | 608 | 113 | 1696 | 160 | 4352 |
| 20 | 192 | 67 | 624 | 114 | 1728 | 161 | 4416 |
| 21 | 200 | 68 | 640 | 115 | 1760 | 162 | 4480 |
| 22 | 208 | 69 | 656 | 116 | 1792 | 163 | 4544 |
| 23 | 216 | 70 | 672 | 117 | 1824 | 164 | 4608 |
| 24 | 224 | 71 | 688 | 118 | 1856 | 165 | 4672 |
| 25 | 232 | 72 | 704 | 119 | 1888 | 166 | 4736 |
| 26 | 240 | 73 | 720 | 120 | 1920 | 167 | 4800 |
| 27 | 248 | 74 | 736 | 121 | 1952 | 168 | 4864 |
| 28 | 256 | 75 | 752 | 122 | 1984 | 169 | 4928 |
| 29 | 264 | 76 | 768 | 123 | 2016 | 170 | 4992 |
| 30 | 272 | 77 | 784 | 124 | 2048 | 171 | 5056 |
| 31 | 280 | 78 | 800 | 125 | 2112 | 172 | 5120 |
| 32 | 288 | 79 | 816 | 126 | 2176 | 173 | 5184 |
| 33 | 296 | 80 | 832 | 127 | 2240 | 174 | 5248 |
| 34 | 304 | 81 | 848 | 128 | 2304 | 175 | 5312 |
| 35 | 312 | 82 | 864 | 129 | 2368 | 176 | 5376 |
| 36 | 320 | 83 | 880 | 130 | 2432 | 177 | 5440 |
| 37 | 328 | 84 | 896 | 131 | 2496 | 178 | 5504 |
| 38 | 336 | 85 | 912 | 132 | 2560 | 179 | 5568 |
| 39 | 344 | 86 | 928 | 133 | 2624 | 180 | 5632 |
| 40 | 352 | 87 | 944 | 134 | 2688 | 181 | 5696 |
| 41 | 360 | 88 | 960 | 135 | 2752 | 182 | 5760 |
| 42 | 368 | 89 | 976 | 136 | 2816 | 183 | 5824 |
| 43 | 376 | 90 | 992 | 137 | 2880 | 184 | 5888 |
| 44 | 384 | 91 | 1008 | 138 | 2944 | 185 | 5952 |
| 45 | 392 | 92 | 1024 | 139 | 3008 | 186 | 6016 |
| 46 | 400 | 93 | 1056 | 140 | 3072 | 187 | 6080 |
| 47 | 408 | 94 | 1088 | 141 | 3136 | 188 | 6144 |

# FIG. 2A

| | |
|---|---|
| INPUT DATA | 6336 |
| ENCODED BLOCK | ENCODED BLOCK #1 / ENCODED BLOCK #2 |
| | 3136 / 3200 |
| TURBO ENCODER 1/3 | 9420 / 9612 |
| | PUNCTURE / PUNCTURE |
| RATE MATCHING PROCESSING | 3532 / 3532 |
| | PROCESSING FOR COMBINING CODED BLOCKS |
| OUTPUT DATA (OVERALL DATA) | 7064 |

COMMUNICATION CHANNEL SIZE

# FIG. 2B

| | |
|---|---|
| INPUT DATA | 6280 |
| ENCODED BLOCK | ENCODED BLOCK #1 / ENCODED BLOCK #2 |
| | 3136 / 3200 |
| (BREAKDOWN OF DIVISION) | 56 / 3080 / 3200 |
| | filler bit / DATA / DATA |
| TURBO ENCODER | 168 / 9252 / 9612 |
| DEPADDING PROCESSING | 9252 / 9612 |
| | PUNCTURE / PUNCTURE |
| RATE MATCHING PROCESSING | 3532 / 3532 |
| | PROCESSING FOR COMBINING CODED BLOCKS |
| OUTPUT DATA (OVERALL DATA) | 7064 |

COMMUNICATION CHANNEL SIZE

# FIG. 3

# FIG. 4

EP 2 139 140 A2

# FIG. 5

| | | | |
|---|---|---|---|
| INPUT DATA | 6280 | | |

| | ENCODED BLOCK #1 | ENCODED BLOCK#2 | |
|---|---|---|---|
| ENCODED BLOCK | 3136 | 3200 | |

| | | | | |
|---|---|---|---|---|
| (BREAKDOWN OF DIVISION) | 56 | 3080 | 3200 | |
| | filler bit | DATA | DATA | |

| | | | |
|---|---|---|---|
| TURBO ENCODER | 168 | 9252 | 9612 |

| | | |
|---|---|---|
| DEPADDING PROCESSING | 9252 | 9612 |
| | PUNCTURE | PUNCTURE |

| | | |
|---|---|---|
| RATE MATCHING PROCESSING | 3465 | 3599 |
| | PROCESSING FOR COMBINING CODED BLOCKS | |

| | |
|---|---|
| OUTPUT DATA (OVERALL DATA) | 7064 |

COMMUNICATION CHANNEL SIZE

EP 2 139 140 A2

## FIG. 6

Block Error Rate

Legend:
- ---□--- Overall Data (Conventional)
- ---○--- Encoded Block #1 (Conventional)
- ---△--- Encoded Block #2 (Conventional)
- ■ Overall Data With Adjustment
- ● Encoded Block #1 With Adjustment
- ▲ Encoded Block #2 With Adjustment

X-axis: SNR (5, 5.4, 5.8, 6.2, 6.6, 7)
Y-axis: Error Rate (1.00E+00, 1.00E-01, 1.00E-02, 1.00E-03, 1.00E-04)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004349742 A